(19) Europäisches Patentamt
European Patent Office
Office européen des brevets

(11) **EP 4 251 776 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **21773548.9**

(22) Anmeldetag: **07.09.2021**

(51) Internationale Patentklassifikation (IPC):
*C21C 5/46* (2006.01)     *C21C 5/52* (2006.01)
*F27B 3/22* (2006.01)     *F27D 3/16* (2006.01)
*C21C 5/34* (2006.01)     *C21C 7/072* (2006.01)

(52) Gemeinsame Patentklassifikation (CPC):
**F27D 3/16; C21C 5/34; C21C 5/4606;**
**C21C 5/5217; C21C 7/072; F27B 3/225;**
Y02P 10/20

(86) Internationale Anmeldenummer:
**PCT/EP2021/074560**

(87) Internationale Veröffentlichungsnummer:
**WO 2022/111873 (02.06.2022 Gazette 2022/22)**

(54) **VERFAHREN ZUR BEHANDLUNG VON METALLSCHMELZEN UND/ODER SCHLACKEN IN METALLURGISCHEN BÄDERN**

PROCESS FOR TREATMENT OF METAL MELT AND / OR SLAG IN METALLURGICAL BATHS

PROCEDE DE TRAITEMENT DU MÉTAL LIQUIDE ET/OU DES SCORIES DANS LES BAINS MÉTALLURGIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2020 DE 102020215076**

(43) Veröffentlichungstag der Anmeldung:
**04.10.2023 Patentblatt 2023/40**

(73) Patentinhaber: **SMS group GmbH**
**41069 Mönchengladbach (DE)**

(72) Erfinder:
• **ODENTHAL, Hans-Jürgen**
**40822 Mettmann (DE)**

• **KEMMINGER, Andreas**
**40213 Düsseldorf (DE)**
• **GEIMER, Stephan**
**45478 Mülheim (DE)**

(74) Vertreter: **Kross, Ulrich**
**Hemmerich & Kollegen**
**Patentanwälte**
**Hammerstraße 2**
**57072 Siegen (DE)**

(56) Entgegenhaltungen:
**DE-A1- 102010 001 669     DE-A1- 102013 226 109**
**DE-A1- 19 637 246     US-A1- 2008 000 325**
**US-A1- 2019 218 631**

**Beschreibung**

Die Erfindung betrifft ein Verfahren zur Behandlung von Metallschmelzen und/oder Schlacken in metallurgischen Bädern, umfassend das Einbringen eines Prozessgases in ein Schmelzebad. Die Erfindung betrifft weiterhin eine metallurgische Anlage zur Behandlung von Metallschmelzen mit einem Schmelzgefäß sowie mit Mitteln zur Begasung einer Metallschmelze und/oder einer Schlacke.

In metallurgischen Anlagen werden Prozessgase wie beispielsweise Luft, Sauerstoff, Stickstoff, Argon, Kohlenwasserstoffe, Wasserstoff etc. zur Behandlung von Metallschmelzen verwendet. Beispielsweise sollen durch eine Behandlung mit diesen Prozessgasen unerwünschte Begleitelemente in der Metallschmelze oxidiert oder Metalle und/oder Schlacken reduziert werden.

Bei der pyrometallurgischen Behandlung von Metallen und Metallschmelzen in Elektrolichtbogenöfen ist das Auf-/Einblasen von sauerstoffreichen Gasen und/oder kohlenstoffhaltigen Partikeln in und/oder auf eine Schlacken/Schaumschlackenschicht bekannt. Aus der EP 1 466 022 B1 ist beispielsweise ein Verfahren zur pyrometallurgischen Behandlung von Metallen, Metallschmelzen und/oder Schlacken bekannt, bei dem sauerstoffhaltige Gase mithilfe einer Injektionsvorrichtung auf Überschallgeschwindigkeit beschleunigt werden, wobei der aus der Injektionsvorrichtung austretende Hochgeschwindigkeitsstrahl zur pyrometallurgischen Behandlung der Metallschmelze verwendet wird. Der Hochgeschwindigkeitsstrahl wird durch einen diesen umhüllenden gasförmigen Mantel aus Heißgas geschützt, der dem Hochgeschwindigkeitsstrahl so zugeführt wird, dass die Relativgeschwindigkeit und der Impulsaustausch zwischen dem zentralen Hochgeschwindigkeitsstrahl und dem Heißgasmantelstrahl minimiert werden. Durch dieses Verfahren, den zentralen sauerstoffreichen Gasstrahl mit einem Heißgas mit möglichst geringem Impulsverlust zu ummanteln, wird eine Maximierung der Länge und der Eindringtiefe des Gasstrahls in die oberhalb der Metallschmelze befindliche Schlackenschicht zur Erzeugung einer intensiven Durchmischung und Bewegung der Schlackenschicht erreicht. Dabei wird der Gasstrahl bei dem in der EP 1 466 022 B1 beschriebenen Verfahren von oben auf die Schlacke und in die Grenzschicht zwischen Schlacke und Metall geblasen.

Aus der WO 2019/158479 A1 ist ein Verfahren zur Behandlung einer Metallschmelze in einem Konverter bekannt, bei welchem reiner Sauerstoff mit hohem Druck und mit Überschallgeschwindigkeit mittels einer wassergekühlten Lanze unter Bildung einer Kavität in der Schlacke von oben auf die Oberfläche des Schmelzebads aufgebracht wird.

Die Verwendung von Überschallinjektoren in dem vorstehend beschriebenen Zusammenhang ist aus diversen Veröffentlichungen bekannt, beispielsweise aus der EP 0 964 065 A1. Die Patentdokumente DE 196 37 246 A1, US 2019/218631 A1 und US 2008/000325 A1 beziehen sich auch auf ein Verfahren zur Behandlung von geschmolzenen Metallen.

Ebenso ist im Stand der Technik bekannt, Prozessgase unterhalb der Schmelzebadoberfläche in die Metallschmelze einzubringen, damit die Prozessgase dort direkt mit dem flüssigen Metall oder der Schlacke reagieren können. Das Einbringen dieser Gase kann beispielsweise durch sogenannte Bodenspüler oder Seitenwandspüler erfolgen. Diese Unterbad Gasbehandlung umfasst das Einbringen des Prozessgases in Form von Blasen oder in Form von geschlossenen Gasstrahlen, die in die flüssige Phase der Schmelze eintreten. Die Injektion von Gasstrahlen erfolgt bei der Unterbad Gasbehandlung mit Geschwindigkeiten unterhalb der Schallgeschwindigkeit. Bei vielen Anwendungen kommt es im Bereich des Eintritts der Prozessgase in die Metallschmelze zu unerwünschten Begleiterscheinungen, beispielsweise zum Zuwachsen der Spüler. Außerdem ist das Feuerfestmaterial des Schmelzgefäßes oberhalb des Gaseintritts einem erhöhten Verschleiß ausgesetzt. Grundsätzlich sind eine hohe Eindringtiefe des Prozessgases in die Metallschmelze sowie die Erzeugung einer Rührwirkung durch den Gaseintritt innerhalb der Metallschmelze wünschenswert.

Der Erfindung liegt daher die Aufgabe zugrunde, ein Verfahren der eingangs genannten Art bereitzustellen, das die zuvor erwähnten Nachteile vermeidet.

Die der Erfindung zugrunde liegende Aufgabe wird gelöst durch ein Verfahren mit den Merkmalen des Anspruchs 1.

Vorteilhafte Ausgestaltungen der Erfindung sind von den Unteransprüchen erfasst.

Ein Gesichtspunkt der Erfindung betrifft ein Verfahren zur Behandlung von Metallschmelzen und/oder Schlacken in metallurgischen Bädern, umfassend das Einbringen eines Prozessgases in ein Schmelzebad, wobei das Prozessgas auf Überschallgeschwindigkeit beschleunigt wird und unterhalb der Schmelzebadoberfläche mittels wenigstens einer Überschalldüse mit Überschallgeschwindigkeit in die flüssige Phase der Metallschmelze und/oder in die Schlacke und/oder in den Bereich einer Phasengrenze zwischen Metallschmelze und Schlacke eingetragen wird.

Der Begriff Schmelzebad im Sinne der vorliegenden Erfindung umfasst sowohl die Metallschmelze als auch die in der Schmelze suspendierten Schlacketröpfchen sowie die auf der Schmelze befindliche Schlacke.

Die Verfahrensweise gemäß der Erfindung hat insbesondere den Vorzug, dass durch die Beschleunigung des Prozessgases auf Überschallgeschwindigkeit der Austrittsimpuls des Prozessgases in die flüssige Phase der Metallschmelze signifikant erhöht wird, woraus eine höhere Eindringtiefe des Prozessgases bzw. des Überschall-Gasstrahls in die Metallschmelze bewirkt wird. Bei einem höheren Austrittsimpuls des Prozessgases in die Metallschmelze wird zudem ein erhöhter Verschleiß des Feuerfestmaterials eines die Metallschmelze aufnehmenden metallurgischen Gefäßes vermieden. Der höhere Austrittsimpuls verlagert den Bereich, in dem einzelne Gasblasen von dem in die Metallschmelze eindringenden Gasstrahl abreißen, weiter weg von der Gefäßwand. Das damit verbundene Zurückschlagen des Gasstrahls an die Gefäßwand (back attack) wird reduziert, wodurch der Verschleiß des Feuerfestmaterials reduziert wird. Das Einbringen des Prozessgases bzw. der Prozessgase mit Überschallgeschwindigkeit erzeugt Turbulenzen in der Metallschmelze und folglich eine Rührwirkung in der Metallschmelze. Durch den höheren Impuls des Prozessgases beim Eintritt in die Metallschmelze oder Schlacke wird ein Zurücklaufen der Metallschmelze oder Schlacke erschwert. Dadurch verringert sich die Verstopfungsgefahr an der verwendeten Überschalldüse. Hohe Scherkräfte zwischen den Prozessgasen und der Metallschmelze führen ferner zu einem stärkeren Zerfall von Primärblasen und zu kleineren Blasengrößen, wodurch die Gesamtoberfläche der Gasblasen vergrößert wird. Dies wiederum führt zu einer höheren Ausbringung des Prozessgases.

Als Prozessgas ist zweckmäßigerweise ein Gas vorgesehen, das ausgewählt ist aus einer Gruppe umfassend Luft, Sauerstoff, Stickstoff, Argon, Kohlenwasserstoffe ($C_xH_y$) und Wasserstoff.

Bei einer bevorzugten Variante des Verfahrens gemäß der Erfindung ist vorgesehen, dass das Prozessgas an mehreren Stellen des Schmelzebads mit einer Vielzahl von Überschalldüsen eingetragen wird.

Das Prozessgas kann in verschiedenen Höhen bezogen auf die Schmelzebadoberfläche in die Metallschmelze eingetragen werden.

Bei einer vorteilhaften Variante des Verfahrens gemäß der Erfindung ist vorgesehen, dass wenigstens eine Überschalldüse als Laval-Überschalldüse mit einem konvergenten Düsenteil und einen divergenten Düsenteil ausgebildet ist. In dem konvergenten Teil der Düse wird der Durchmesser stetig verjüngt, wobei die Gasgeschwindigkeit steigt und der Druck sinkt, bis im engsten Querschnitt die Schallgeschwindigkeit erreicht wird (Mach-Zahl gleich 1). In dem divergenten Teil der Düse vergrößert sich deren Durchmesser stetig, wobei das Prozessgas weiter beschleunigt wird und der Druck weiter abgebaut wird. Hierbei kommt es zu einer Beschleunigung des Gases über die lokale Schallgeschwindigkeit hinaus.

Sowohl der konvergenten Abschnitt der Überschalldüse als auch der divergente Abschnitt der Überschalldüse können eine glockenförmige Kontur aufweisen, wobei die glockenförmigen Konturen des konvergenten Abschnitts und des divergenten Abschnitts der Überschalldüse in einer Düsenkehle stetig ineinander übergehen. Durch eine solche Geometrie bzw. Kontur ist gewährleistet, dass die Düse störungsfrei und verschleißarm verwendet werden kann und der Strahlimpuls am Düsenaustritt maximal ist, sodass eine große Überschalllänge des Gasstrahls realisiert wird.

Eine Überschalldüse kann grundsätzlich nur für einen Betriebspunkt bezüglich des Vordruckes des Prozessgases, des Volumenstroms und des Umgebungsdrucks innerhalb der Metallschmelze ausgelegt werden. Vorzugsweise wird dieser gasdynamische Auslegungspunkt der Überschalldüse so gewählt, dass der Gasdruck des Prozessgases an einem Austrittsquerschnitt der Überschalldüse dem Umgebungsdruck innerhalb der Metallschmelze entspricht. Wenn der Gasdruck des Prozessgases an einem Eintrittsquerschnitt der Überschalldüse so eingestellt wird, dass der Gasdruck des Prozessgases am Austrittsquerschnitt der Überschalldüse dem Umgebungsdruck innerhalb der Metallschmelze entspricht, wird die Überschalldüse im Auslegungspunkt betrieben.

Die Auslegung der Überschalldüse erfolgt vorzugsweise nach der isentropen Stromfadentheorie oder mithilfe eines Charakteristikenverfahrens. Das Ziel der Auslegung für das Verfahren gemäß der Erfindung ist es, die Austrittsfläche der Überschalldüse ähnlich groß zu gestalten, wie die Austrittsfläche der im Stand der Technik verwendeten Unterschalldüsen. Bei gleichem Austrittsquerschnitt erzeugt eine entsprechend ausgelegte Überschalldüse eine höhere Austritts-Impulskraft. Diese Kraft ergibt sich aus:

$$F_{\text{Austrittsimpuls}} = \rho u^2 A \, [N],$$

wobei $\rho$ die Gasdichte am Düsenaustritt, u die Gasgeschwindigkeit am Düsenaustritt und A den Austrittsdurchmesser der Überschalldüse bezeichnen.

Das Charakteristikenverfahren ist ein mathematisches Verfahren zur Lösung der nachstehend wiedergegebenen partiellen, gasdynamischen Differenzialgleichung für stationäre isentrope, rotationssymmetrische Gasströmungen:

$$(u^2 - a^2)\frac{\partial u}{\partial x} + (v^2 - a^2)\frac{\partial v}{\partial r} + uv\left(\frac{\partial u}{\partial r} + \frac{\partial v}{\partial x}\right) = 0$$

u,v: Strömungsgeschwindigkeit in Axial- und Radialrichtung

x,r: Axial- und Radialkoordinate

a: Schallgeschwindigkeit

Dabei werden die Mach'schen Linien, d. h. die Linien schwacher Druckstörungen, die sich mit Schallgeschwindigkeit fortpflanzen und die unter einem bestimmten Winkel zum lokalen Geschwindigkeitsvektor angeordnet sind, als Grundlage für die so genannten rechts- und linkslaufenden Charakteristiken angesetzt. Entlang dieser charakteristischen Linien (Charakteristiken) ist die analytische Lösung der obigen Differentialgleichung möglich und daher bekannt.

Bei einer beanspruchten Variante des Verfahrens gemäß der Erfindung kann vorgesehen sein, dass wenigstens eine Überschalldüse außerhalb eines gasdynamischen Auslegungspunkts betrieben wird. Beispielsweise kann vorgesehen sein, die Überschalldüse so zu betreiben, dass das Prozessgas in der Metallschmelze unterexpandiert oder überexpandiert, was zum Auftreten von schrägen oder senkrechten Verdichtungsstößen sowie von Expansionswellen in der Metallschmelze führt. Dadurch kann eine Pumpbewegung in der Metallschmelze erzeugt werden. Zu einem Überexpandieren des Prozessgases kommt es, wenn das Prozessgas der Überschalldüse mit einem kleineren Druck (Vordruck) als dem auslegungsgemäßen Vordruck zugeführt wird. Zu einem Unterexpandieren des Prozessgases kommt es, wenn der Vordruck des Prozessgases an einem Eintrittsquerschnitt der Überschalldüse mit einem größeren als dem auslegungsgemäßen Vordruck zugeführt wird. Sowohl bei der einen als auch bei der anderen Betriebsweise bilden sich in der Metallschmelze komplexe Störungsmuster (diamond pattern) in Form von Expansionswellen und Verdichtungsstößen aus, die sich das erfindungsgemäße Verfahren zur Erzielung einer Rührwirkung innerhalb der Metallschmelze zu Nutze macht.

Bei einer weiterhin vorteilhaften Variante des Verfahrens gemäß der Erfindung kann vorgesehen sein, dass wenigstens eine Überschalldüse mit sich während des Betriebs ändernden Volumenströmen und/oder Drücken des Prozessgases beaufschlagt wird, sodass durch einen solchen pulsierenden Betrieb der Überschalldüse eine vorteilhafte Pumpwirkung und damit einen intensive Durchmischung innerhalb der Metallschmelze erzeugt wird.

Wenn mehrere Überschalldüsen an verschiedenen Stellen und in verschiedenen Höhen in Bezug auf die Schmelzebadoberfläche an oder in einem metallurgischen Gefäß angeordnet sind, können diese beispielsweise jeweils für unterschiedliche Betriebspunkte ausgelegt sein, d. h., unterschiedliche Durchmesser aufweisen.

Einzelne Überschalldüsen eines metallurgischen Gefäßes können individuell angesteuert und dabei mit wechselnden Volumenströmen und/oder Drücken beaufschlagt werden. Auf diese Art und Weise kann das Verfahren verschiedenen Geometrien unterschiedlicher metallurgische Gefäße Rechnung tragen.

Das Prozessgas kann vertikal von unten und/oder seitlich unter verschiedenen Winkeln in ein metallurgisches Gefäß eingebracht werden.

Das Prozessgas kann entweder unmittelbar in die flüssige Phase der Metallschmelze und/oder Schlacke als auch alternativ oder zusätzlich im Bereich einer Phasengrenze zwischen Metallschmelze und Schlacke eingebracht werden. Ein wesentliches Merkmal des erfindungsgemäßen Verfahrens ist jedenfalls, dass das Prozessgas in das Unterbad eingetragen wird.

Das Verfahren gemäß der Erfindung umfasst die Verwendung eines metallurgischen Gefäßes, beispielsweise in Form eines Konverters, einer Gießpfanne, eines Elektrolichtbogenofens oder dergleichen mit einer Vielzahl von eine Wand und/oder einen Boden des Gefäßes durchsetzenden Überschalldüsen.

Als metallurgisches Gefäß kann beispielsweise ein Pierce Smith Konverter Anwendung finden. Ein solcher Konverter umfasst einen drehbaren Zylinder zur Aufnahme der Metallschmelze. Durch die Drehung des Zylinders lassen sich die Überschalldüsen so positionieren, dass z. B. das Prozessgas in dem Bereich der Phasengrenze zwischen Schlacke und Schmelze eingebracht werden kann. Dadurch wird eine Intensivierung der Gasbehandlung erreicht.

Ein weiterer Gesichtspunkt der Erfindung betrifft eine metallurgische Anlage zur Behandlung von Metallschmelzen mit einem metallurgischen Gefäß, mit Mitteln zur Begasung einer Metallschmelze und/oder einer Schlacke, die sich dadurch auszeichnet, dass die Mittel zur Begasung der Metallschmelze wenigstens eine Überschalldüse in einem Boden und/oder in einer Wand des metallurgischen Gefäßes umfassen, die bezüglich einer Schmelzebadoberfläche so angeordnet ist, dass eine Unterbad Einbringung des Prozessgases in die Metallschmelze durchführbar ist.

Zweckmäßigerweise sind mehrere Überschalldüsen in wenigstens einer austauschbaren Kassette des Schmelzgefäßes angeordnet. Die Kassette kann ein Düsenfeld mit einer Vielzahl in einem vorgegebenen Muster angeordneten Überschalldüsen aufweisen. Auf diese Art und Weise können mehrere Überschalldüsen schnell und einfach ein- und ausgebaut werden. Die Anordnung der Überschalldüsen in einer oder mehreren Kassetten und die Anzahl der Kassetten richtet sich nach der Art der Anwendung.

Bei einer vorteilhaften Variante der Anlage gemäß der Erfindung können mehrere Düsen in einer Kassette für einen unterschiedlichen Volumenstrom des der Metallschmelze zuzuführenden Prozessgases ausgelegt sein.

Die Erfindung wird nachstehend unter Bezugnahme auf die beigefügten Figuren erläutert.

Es zeigen:

Figur 1     eine schematische Darstellung der Anordnung einer Überschalldüse in einer Seitenwand eines metallurgischen Gefäßes gemäß der Erfindung,

Figur 2     eine schematische Darstellung eines als Pierce Smith Konverter ausgebildeten metallurgischen Gefäßes gemäß der Erfindung,

Figur 3     eine Darstellung, die das Geschwindigkeitsprofil des aus einer im Auslegungspunkt betriebenen Überschalldüse gemäß der Erfindung austretenden Prozessgases zeigt,

Figur 4     eine der Figur 2 entsprechende Abbildung, wobei die von dem austretenden Prozessgas erzeugten Wellenmuster innerhalb der Metallschmelze bei überexpandierendem Betrieb der Überschalldüse dargestellt sind und

Figur 5    eine der Figur 2 entsprechende Abbildung, wobei die von dem austretenden Prozessgas erzeugten Wellenmuster innerhalb der Metallschmelze bei unterexpandierendem Betrieb der Überschalldüse dargestellt sind.

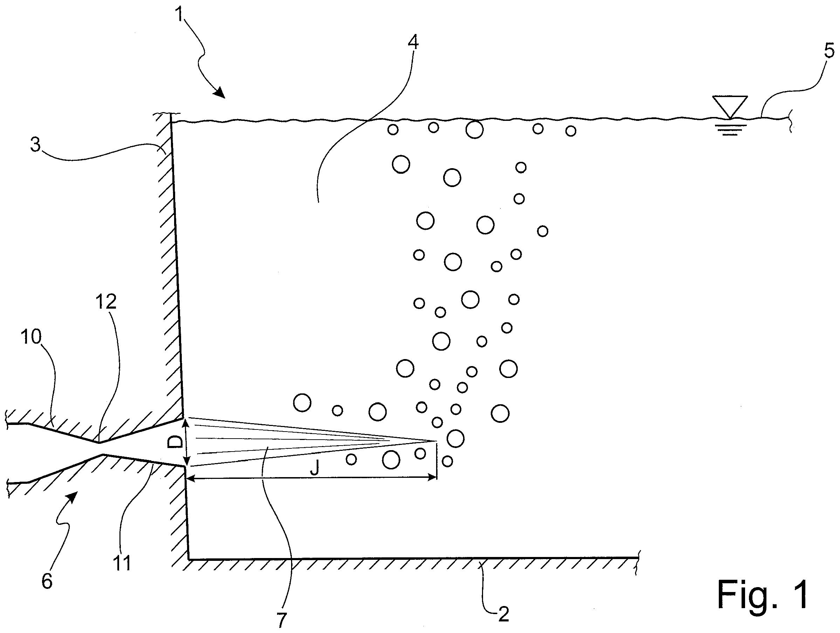

Figur 1 zeigt ein metallurgisches Gefäß 1 einer Anlage gemäß der Erfindung, welches einen Boden 2 und eine Seitenwand 3 umfasst, die mit einem Feuerfestmaterial ausgekleidet sind. Das metallurgische Gefäß 1 ist mit einer Metallschmelze 4 gefüllt, in die erfindungsgemäß unterhalb einer Schmelzebadoberfläche 5 in das Unterbad ein Prozessgas, beispielsweise in Form von reinem Sauerstoff, eingetragen wird. Hierzu ist in der Seitenwand 3 des metallurgischen Gefäßes 1 eine Überschalldüse 6 mit einem bestimmten Austrittsdurchmesser D vorgesehen. Das metallurgische Gefäß 1 ist aus Veranschaulichungsgründen nur vereinfacht dargestellt. Dieses kann mehrere Überschalldüsen 6 umfassen, die an verschiedenen Stellen in die Seitenwand 3 oder in den Boden 2 des metallurgischen Gefäßes 1 eingelassen sind (Seitenwandspüler und/oder Bodenspüler). Der von der Überschalldüse 6 in das metallurgische Gefäß 1 eingetragene Gasstrahl 7 tritt aus der Überschalldüse 6 mit einem Gasdruck aus, der dem in der Metallschmelze 4 vorherrschenden Umgebungsdruck entspricht. Der Gasstrahl 7 besitzt eine Eindringtiefe J, die wegen der Überschallgeschwindigkeit des Gases signifikant höher ist als die Eindringtiefe von Gasstrahlen mit Unterschallgeschwindigkeit.

Die Überschalldüse 6, die erfindungsgemäß Anwendung findet kann als Laval-Überschalldüse mit einem glockenförmig gestalteten konvergenten Düsenteil 10 und einem entsprechend glockenförmig gestalteten divergenten Düsenteil 11 ausgebildet sein, wobei der konvergenten Düsenteil 10 im Bereich einer Düsenkehle 12 kontinuierlich in den divergenten Düsenteil 11 übergeht. Der größte Durchmesser des konvergenten Düsenteils 10 bestimmt den Eintrittsquerschnitt 9 der Überschalldüse 6, wohingegen der größte Durchmesser des divergenten Düsenteils 11 den Austrittsquerschnitt 8 der Überschalldüse 6 bestimmt.

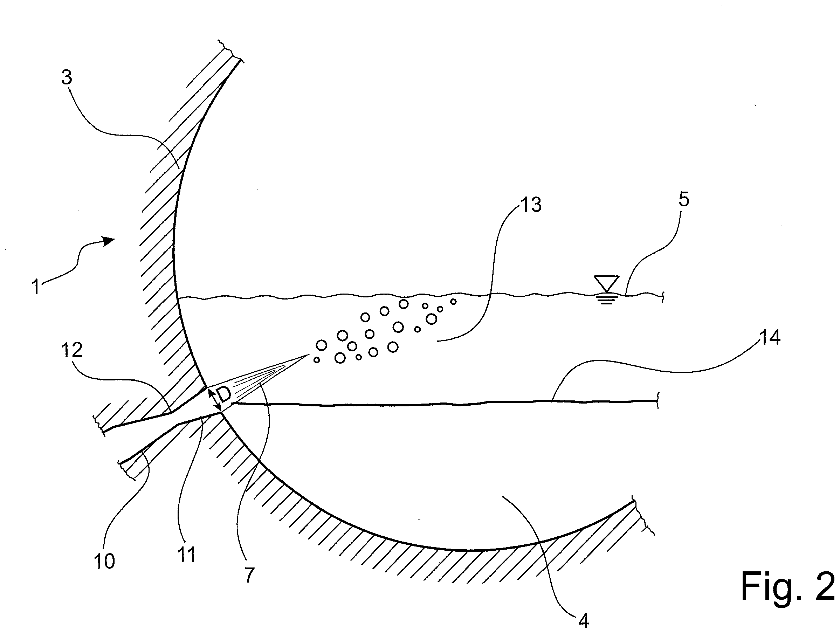

Figur 2 zeigt eine Variante des metallurgischen Gefäßes 1 zur Durchführung des erfindungsgemäßen Verfahrens, dass als Pierce Smith Konverter ausgebildet ist. Das metallurgische Gefäß ist als um die Längsachse drehbarer Zylinder ausgebildet, dessen Seitenwand 3 von wenigstens einer Überschalldüse 6 durchsetzt ist, wobei die Überschalldüse 6 so in der Seitenwand 3 angeordnet ist, dass der Gasstrahl 7 mit Überschallgeschwindigkeit entweder in die flüssige Phase der Metallschmelze 4 oder in die Schlacke 13 oder in den Bereich einer Phasengrenze 14 zwischen der Metallschmelze 4 und der Schlacke 13 unterhalb der Schmelzebadoberfläche 5 in die Flüssigkeit einbringbar ist. Bei der in Figur 2 gezeigten Variante des metallurgischen Gefäßes 1 werden die in Figur 1 verwendeten Bezugzeichen für entsprechende Merkmale verwendet, wobei die Seitenwand im Gegensatz zu dem metallurgischen Gefäß 1 gemäß Figur 1 keinen ausgezeichneten Boden umfasst, da das metallurgische Gefäß eine zylindrische Mantelfläche und Stirnflächen umfasst, wobei die Mantelfläche vorstehend als Seitenwand 3 bezeichnet wird.

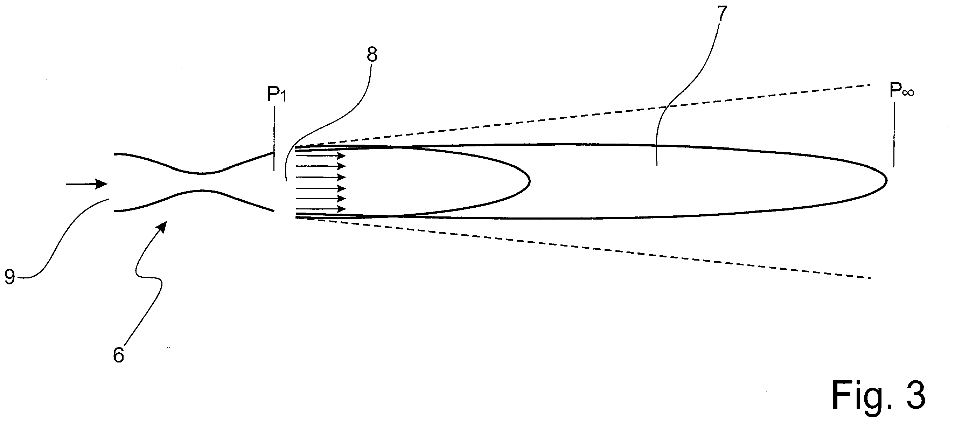

Die Figuren 3 bis 5 veranschaulichen verschiedene Betriebsweisen der metallurgischen Anlage gemäß der Erfindung.

In Figur 3 ist das Geschwindigkeitsprofil des Gasstrahls 7 an einer im Auslegungspunkt betriebenen Überschalldüse 6 dargestellt. Bei dieser Betriebsweise entspricht der Druck p1 am Austrittsquerschnitt 8 der Überschalldüse 6 dem Druck p∞ in der Metallschmelze. Der Vordruck p0 entspricht dem auslegungsgemäßen Vordruck p0. Am Austrittsquerschnitt 8 der Überschalldüse stellt sich ein gleichförmiges, homogenes Geschwindigkeitsprofil ein.

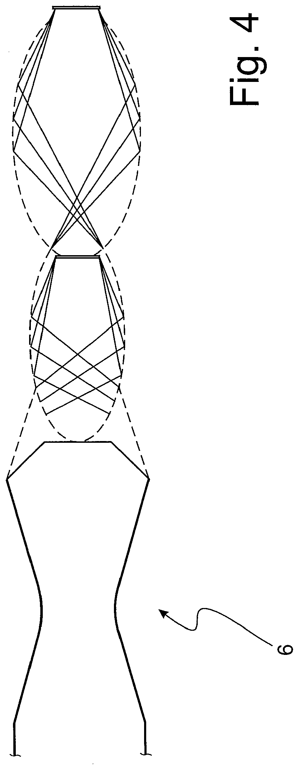

Bei der in Figur 4 veranschaulichten Variante des Betriebs der Überschalldüse 6 ist der Vordruck p0 des Prozessgases kleiner gewählt als der auslegungsgemäße Vordruck p0. Am Austrittsquerschnitt 8 der Überschalldüse 6 herrscht ein entsprechend geringerer Druck p1 des Prozessgases, der kleiner ist als der Umgebungsdruck p∞ in der Metallschmelze 4. Dadurch wird in der Metallschmelze 4 eine Abfolge von Kompressionswellen und Expansionswellen erzeugt, die das dargestellte Störungsmuster in Form von Verdichtungsstößen und Expansionswellen erzeugt. Die in Figur 3 dargestellte Variante des Betriebs der Überschalldüse 6 wird als überexpandierender Betrieb bezeichnet.

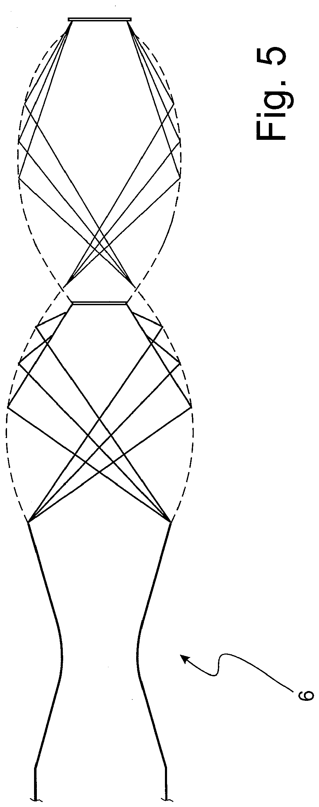

Figur 5 zeigt schließlich das an der Überschalldüse 6 entstehende Störungsmuster der Gasströmung innerhalb der Metallschmelze 4, das bei unterexpandierendem Betrieb erzeugt wird. Der Vordruck p0 des Prozessgases ist bei dieser Betriebsweise der Überschalldüse 6 größer als der auslegungsgemäße Vordruck p0. Daraus resultiert ein größerer Druck p1 des Prozessgases am Austrittsquerschnitt 8 der Überschalldüse, der größer ist als der Umgebungsdruck p∞ innerhalb der Metallschmelze 4. Das bewirkt eine Nachexpansion des Prozessgases innerhalb der Metallschmelze 4.

Bezugszeichenliste

1    metallurgisches Gefäß
2    Boden des metallurgischen Gefäßes
3    Seitenwand des metallurgischen Gefäßes
4    Metallschmelze
5    Schmelzebadoberfläche
6    Überschalldüse
7    Gasstrahl
8    Austrittsquerschnitt der Überschalldüse

| 9 | Eintrittsquerschnitt der Überschalldüse |
|---|---|
| 10 | konvergenter Teil der Überschalldüse |
| 11 | divergenter Teil der Überschalldüse |
| 12 | Düsenkehle |
| 13 | Schlacke |
| 14 | Phasengrenze |
| J | Eindringtiefe des Gasstrahls |
| p0 | Vordruck des Prozessgases |
| p1 | Druck des Prozessgases am Austrittsquerschnitt der Überschalldüse |
| p∞ | Druck in der Metallschmelze |

**Patentansprüche**

1. Verfahren zur Behandlung von Metallschmelzen (4) und/oder Schlacken in metallurgischen Bädern, umfassend das Einbringen eines Prozessgases in ein Schmelzebad wobei das Prozessgas auf Überschallgeschwindigkeit beschleunigt wird und unterhalb der Schmelzebadoberfläche (5) mittels wenigstens einer Überschalldüse (6) mit Überschallgeschwindigkeit in die flüssige Phase der Metallschmelze (4) und/oder in die Schlacke (13) und/oder in den Bereich einer Phasengrenze (14) zwischen Metallschmelze und Schlacke (13) eingetragen wird, wobei das Prozessgas an mehreren Stellen des Schmelzebads mit einer Vielzahl von Überschalldüsen (6) eingetragen wird und wobei wenigstens eine Überschalldüse (6) außerhalb des gasdynamischen Auslegungspunkts betrieben wird.

2. Verfahren nach einem der Ansprüche 1, **dadurch gekennzeichnet, dass** das Prozessgas in verschiedenen Höhen bezogen auf die Schmelzebadoberfläche (5) in die Metallschmelze (4) eingetragen wird.

3. Verfahren nach einem der Ansprüche 1 oder 2, **dadurch gekennzeichnet, dass** wenigstens eine Überschalldüse (6) als Überschalldüse mit einem konvergenten Düsenteil (10) und einen divergenten Düsenteil (11) ausgebildet ist.

4. Verfahren nach einem der Ansprüche 1 bis 3, **dadurch gekennzeichnet, dass** der gasdynamische Auslegungspunkt wenigstens einer Überschalldüse (6) so gewählt ist, dass der Gasdruck des Prozessgases an einem Austrittsquerschnitt (8) der Überschalldüse (6) dem Umgebungsdruck innerhalb der Metallschmelze (4) entspricht.

5. Verfahren nach einem der Ansprüche 1 bis 4, **dadurch gekennzeichnet, dass** wenigstens eine Überschalldüse (6) mit sich während des Betriebs ändernden Volumenströmen und/oder Drücken des Prozessgases beaufschlagt wird.

6. Verfahren nach einem der Ansprüche 1 bis 5, **da-**

**durch gekennzeichnet, dass** das Prozessgas vertikal von unten und/oder seitlich in ein metallurgisches Gefäß (1) eingebracht wird.

7. Verfahren nach einem der Ansprüche 1 bis 6, **gekennzeichnet durch** die Verwendung eines metallurgischen Gefäßes (1) mit einer Vielzahl von eine Wand und/oder einen Boden des Gefäßes durchsetzenden Überschalldüsen (6).

**Claims**

1. Method for treatment of metal melts (4) and/or slags in metallurgical baths, comprising introduction of a process gas into a melt bath, wherein the process gas is accelerated to ultrasonic speed and is inducted by means of at least one supersonic nozzle (6) at supersonic speed into the liquid phase of the metal melt (4) and/or into the slag (13) and/or into the region of a phase boundary (14) between metal melt and slag (13), wherein the process gas is inducted at several points of the melt bath by a plurality of supersonic nozzles (6) and wherein at least one supersonic nozzle (6) is operated outside the gas-dynamic design point.

2. Method according to claim 1, **characterised in that** the process gas is inducted into the metal melt (4) at different heights referred to the melt bath surface (5).

3. Method according to one of claims 1 and 2, **characterised in that** at least one supersonic nozzle (6) is constructed as a supersonic nozzle with a convergent nozzle part (10) and a divergent nozzle part (11).

4. Method according to any one of claims 1 to 3, **characterised in that** the gas-dynamic design point of at least one supersonic nozzle (6) is so selected that the gas pressure of the process gas at an outlet cross-section (8) of the supersonic nozzle (6) corresponds with the ambient pressure within the metal melt (4).

5. Method according to any one of claims 1 to 4, **characterised in that** at least one supersonic nozzle (6) is acted on with volume flows and/or pressures of the process gas which change during the operation.

6. Method according to any one of claims 1 to 5, **characterised in that** the process gas is introduced vertically from below and/or laterally into a metallurgical vessel (1).

7. Method according to any one of claims 1 to 6, **characterised by** the use of a metallurgical vessel (1) with a plurality of supersonic nozzles (6) penetrating a wall and/or a base of the vessel.

**Revendications**

1. Procédé de traitement de métaux en fusion (4) et/ou de scories dans des bains métallurgiques, comprenant l'introduction d'un gaz de processus dans un bain de fusion, le gaz de processus étant accéléré à une vitesse supersonique et introduit en dessous de la surface du bain de fusion (5) au moyen d'au moins une buse supersonique (6) à une vitesse supersonique dans la phase liquide du métal en fusion (4) et/ou dans la scorie (13) et/ou dans la zone d'une interface de phase (14) entre le métal en fusion et la scorie (13), le gaz de processus étant introduit en plusieurs points du bain de fusion au moyen d'une pluralité de buses supersoniques (6) et au moins une buse supersonique (6) étant opérée en dehors du point de conception dynamique des gaz.

2. Procédé selon la revendication 1, **caractérisé en ce que** le gaz de processus est introduit dans le métal en fusion (4) à différentes hauteurs par rapport à la surface du bain de fusion (5).

3. Procédé selon l'une des revendications 1 ou 2, **caractérisé en ce qu'**au moins une buse supersonique (6) est conçue avec une partie de buse convergente (10) et une partie de buse divergente (11).

4. Procédé selon l'une des revendications 1 à 3, **caractérisé en ce que** le point de conception dynamique des gaz d'au moins une buse supersonique (6) est choisi de manière à ce que la pression du gaz de processus à une section de sortie (8) de la buse supersonique (6) corresponde à la pression ambiante à l'intérieur du métal en fusion (4).

5. Procédé selon l'une des revendications 1 à 4, **caractérisé en ce qu'**au moins une buse supersonique (6) est soumise à des débits et/ou des pressions de gaz de processus variables pendant le fonctionnement.

6. Procédé selon l'une des revendications 1 à 5, **caractérisé en ce que** le gaz de processus est introduit verticalement par le bas et/ou latéralement dans un récipient métallurgique (1).

7. Procédé selon l'une des revendications 1 à 6, **caractérisé par** l'utilisation d'un récipient métallurgique (1) avec une pluralité de buses supersoniques (6) traversant une paroi et/ou un fond du récipient.

EP 4 251 776 B1

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1466022 B1
- WO 2019158479 A1
- EP 0964065 A1
- DE 19637246 A1
- US 2019218631 A1
- US 2008000325 A1